Europäisches Patentamt

European Patent Office

Office européen des brevets

(11) Veröffentlichungsnummer : **0 394 555 B1**

(19)

(12) **EUROPÄISCHE PATENTSCHRIFT**

(45) Veröffentlichungstag der Patentschrift :
**15.04.92 Patentblatt 92/16**

(51) Int. Cl.⁵ : **B60B 33/02**

(21) Anmeldenummer : **89123093.0**

(22) Anmeldetag : **14.12.89**

(54) **Lenkrolle für fahrbare Geräte.**

(30) Priorität : **26.04.89 DE 3913690**

(43) Veröffentlichungstag der Anmeldung :
**31.10.90 Patentblatt 90/44**

(45) Bekanntmachung des Hinweises auf die
Patenterteilung :
**15.04.92 Patentblatt 92/16**

(84) Benannte Vertragsstaaten :
**ES FR GB IT NL**

(56) Entgegenhaltungen :
**CH-A- 475 107**
**DE-A- 2 136 353**
**FR-A- 2 242 255**
**GB-A- 2 179 848**

(73) Patentinhaber : **Albert Schulte Söhne GmbH. &**
**Co.**
**Remscheider Strasse 25**
**W-5632 Wermelskirchen (DE)**

(72) Erfinder : **Schulte, Rolf**
**Adlerstrasse 70**
**W-5630 Remscheid (DE)**

(74) Vertreter : **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**W-5600 Wuppertal 2 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Lenkrolle für fahrbare Geräte, insbesondere Müllcontainer, mit einer Feststellvorrichtung, die einen in einem mit einer Befestigungsplatte verbundenen Führungsgehäuse gelagerten Stellnocken aufweist, der einen im Führungsgehäuse undrehbar, aber axial verschiebbar angeordneten, einen Lagerkopf zentral durchdringenden Stellbolzen beaufschlagt, der durch den Radgabelrücken hindurch in die Radgabelhöhlung einragend von einer im Lösesinne selbsttätig rückstellenden Bremslasche belastet ist, und der mit einem an seinem Ansatz anliegenden, im Feststellsinne von einer Feder gestützten, mit der Radgabel formschlüssig verbindbaren Sperrstern drehfest verbunden ist, wobei die einerends den Sperrstern beaufschlagende Feder andernends am Führungsgehäuse abgestützt ist.

Bei einer bekannten Lenkrolle der vorgenannten Art ist im Feststellfall der Sperrstern mit der Radgabel drehfest verbunden und ist seinerseits auch drehfest am Stellbolzen gehalten, der selbst wiederum drehfest in das Führungsgehäuse eingreift. Dieses Führungsgehäuse ist von einem mit der Befestigungsplatte fest verbundenen Rohrmantel umgriffen, der mit abgebördelten Zungen in Aufnahmen des Führungsgehäuses zu dessen Drehsicherung eingreift. Die Drehmomentenübertragung nimmt nun den Weg vom Sperrstern über den Stellbolzen, das Führungsgehäuse und den Rohrmantel in die Befestigungsplatte. Das aus der gesperrten Schwenkbewegung resultierende Drehmoment kann in besonderen Fällen, wenn beispielsweise das fahrbare Gerät auf einer geneigten Unterlage festgestellt ist, relativ hoch sein, so daß es bei dem doch langen Übertragungsweg des Drehmomentes an solchen Bauteilen leicht zu Beschädigungen kommen kann, die aus Gewichtsersparnisgründen beispielsweise durch Kunststoff hergestellt sein könnten, wie dies für das Führungsgehäuse wünschenswert ist.

Die Aufgabe der vorliegenden Erfindung besteht darin, eine Lenkrolle der eingangs genannten Art dahingehend zu verbessern, daß ein durch den Sperrstern in den Stellbolzen eingeleitetes Drehmoment auf kurzem Wege und unmittelbar in die Befestigungsplatte eingeleitet werden kann.

Diese Aufgabe ist erfindungsgemäß dadurch gelöst, daß eine zwischen dem Führungsgehäuse und der Feder angeordnete, den Stellbolzen formschlüssig und drehfest umfassende Übertragungsscheibe ebenfalls mit der Befestigungsplatte in formschlüssigem und drehfestem Eingriff ist. Durch diese am Stellbolzen drehfest festgelegte, jedoch eine Axialverschiebung des Stellbolzens zulassende Übertragungsscheibe ist die Einleitung des aus der gesperrten Schwenkbewegung resultierenden Drehmomentes unmittelbar in die Befestigungsplatte möglich, so daß Beschädigungen des den Stellbolzen aufnehmenden Führungsgehäuses bzw. des dieses Führungsgehäuse umfassenden Rohrmantels verhindert werden.

Zur formschlüssigen Verbindung der Übertragungsscheibe mit der Befestigungsplatte weist die einen Vierkantschaft des Stellbolzens formschlüssig umfassende Übertragungsscheibe an ihrem Umfang wenigstens eine Ausnehmung auf, in die ein Vorsprung der Befestigungsplatte eingreift. Dabei mag es zur Erhöhung der Sicherheit der Drehmomentübertragung vorteilhaft sein, wenn die Übertragungsscheibe mehrere an ihrem Umfang verteilt angeordnete Ausnehmungen aufweist, in die eine damit übereinstimmende Anzahl von Vorsprüngen der Befestigungsplatte eingreift.

Eine vom Materialaufwand und der Fertigung her einfache Ausbildung der Vorsprünge wird erzielt, indem die Vorsprünge von Ausformungen am Zentralverbindungskragen der Befestigungsplatte gebildet sind.

Die Erfindung ist auf der Zeichnung in einem Ausführungsbeispiel dargestellt und wird nachfolgend näher erläutert. Es zeigen:

Fig. 1 den mit einer Feststellvorrichtung versehenen Lagerkopf der erfindungsgemäßen Lenkrolle in einem Vertikalschnitt,

Fig. 2 die Verbindungslage zwischen der den Stellbolzen umfassenden Übertragungsscheibe und der Befestigungsplatte in einem Unteransichts-Schnitt nach der Linie II - II von Fig. 1,

Fig. 3 den in Sperrstellung befindlichen, den Stellbolzen umfassenden Sperrstern in einer ausgebrochenen Draufsicht nach dem Schnitt der Linie III - III von Fig. 1.

Das Laufrad 10 ist zwischen den Schenkeln einer Radgabel 11 auf einer die Gabelschenkel durchquerenden Achse gelagert, wobei die Gabelschenkel durch den Gabelrücken 12 miteinander einstückig verbunden sind. Der in seinem Zentrum topfartig ausgepreßte Gabelrücken 12 bildet einen Lagerkopf 15, der an seinem Topfboden als Laufbahn für zwei Kugelkränze hergerichtet ist, und der zwischen eine,eine durch einen Verbindungskragen 40 gebildete, zentrische Bohrung 16 aufweisende Befestigungsplatte 17 und einen damit zentrisch verbundenen Lagerring 18 faßt. Sowohl die Befestigungsplatte 17 als auch der Lagerring 18 weist jeweils eine Gegenlaufbahn für die am Topfboden 14 abgestützten Kugelkränze auf. Zentrisch zur Bohrung 16 ist an der Befestigungsplatte 17 des Lagerkopfes 15 ein Rohrmantel 19 - beispielsweise durch Verschweißung - befestigt, wobei im Rohrmantel 19 zwei ein Führungsgehäuse 20 bildende Halbschalen 21 und 22 formschlüssig durch oberseitig in Ausnehmungen der Halbschalen eingebördelte Zungen 13 festgelegt sind. Das Führungsgehäuse 20 weist unterseitig einen Aufnahmeraum für den Vierkantschaft 24 eines Stellbolzens 23 auf, der

2

oberseitig mit einer Kugelkalotte 25 an der nicht dargestellten Steuerkurve eines Nockens 26 anliegt. Diese Steuerkurve umfaßt bekanntlich eine Rastausnehmung und einen in bezug auf die Feststellbewegung ansteigenden Sperrkurvenabschnitt. Der Nocken 26 stützt sich mit seinem mehr als halbkreisförmigen Außenumfang an einer halbkreisförmigen Führungsbahn im Aufnahmeraum der Halbschalen 21 und 22 ab und weist Anschlagnasen auf, die sich an Horizontalwandungen der Halbschalen 21 und 22 je nach Stell-Lage zur Anschlagsbegrenzung wechselweise anlegen können. Im Zentrum des Nockens befindet sich eine unrunde Mitnehmerbohrung 27, in welche der unrunde Abschnitt einer nicht dargestellten Stellwelle eingreifen kann.

Am Unterende des Stellbolzens 23 befindet sich ein Gewindezapfen 28, der eine Hutmutter 30 trägt. Diese Hutmutter weist einen Führungskragen 31 auf, der schließend längsverschiebbar in einer dem Radgabelrücken 12 zugeordneten Führungshülse 32 abgestützt ist. Bei dem dargestellten Ausführungsbeispiel ist die Führungshülse als einstückiger Formteil einer mit dem Radgabelrücken fest verbundenen, die Radgabelhöhlung überbrückenden Halteplatte 33 ausgebildet. Dabei bildet die Führungshülse 32 den Fortsatz einer einen scheibenförmigen Sperrstern 34 formschlüssig aufnehmenden Vertiefung 35 der Halteplatte 33. Diese Halteplatte 33 weist beiderseits ihrer Führungshülse 32 Abschnitte auf, in welche ausgeprägte Haltezungen 36 des Gabelrückens 12 eingreifen, die auf der Unterseite der Halteplatte 33 zu deren Festlegung am Gabelrücken 12 abgebogen sind. Die Hutmutter 30 wird unterseitig von einer am Gabelrücken 12 festgelegten und im Lösesinn eigenfedernden Bremslasche 37 beaufschlagt.

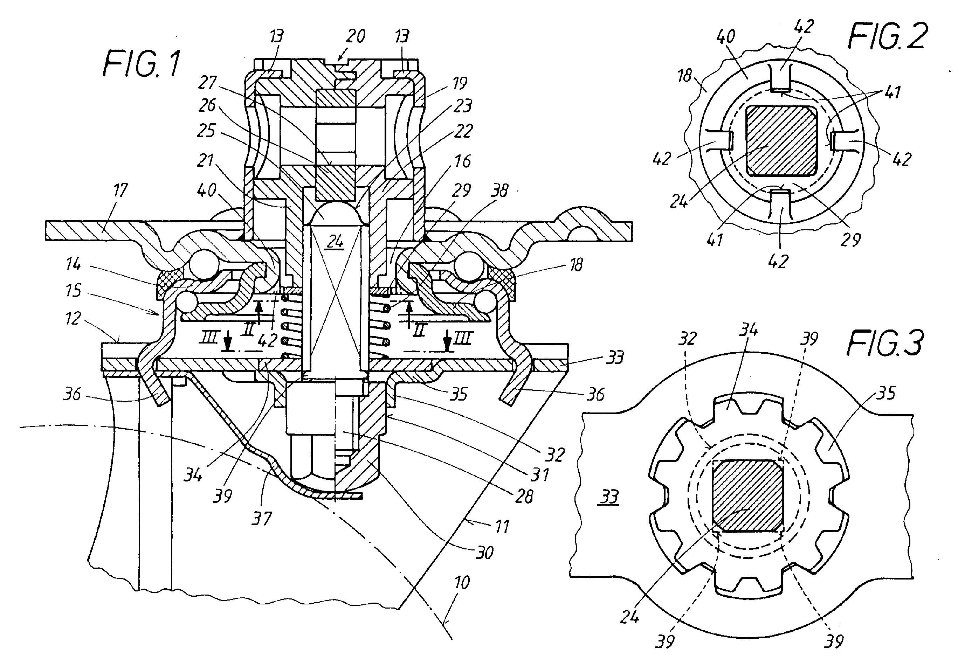

An den Sperrstern 34 legt sich oberseitig das eine Ende einer Druckfeder 38 an, die an einer sich an die Unterseite der Halbschalen 21 und 22 anlegenden Übertragungsscheibe 39 abgestützt ist. Dieser den Vierkantschaft 24 formschlüssig umfassende Sperrstern 34 kann im Lösesinne von die Fasen des Vierkantschaftes 24 unterseitig überragenden Ecken 39 mitgenommen werden. In der aus Fig. 1 ersichtlichen Sperrlage greift der Sperrstern 34 in die eine entsprechende Innenzahnung aufweisende Vertiefung 35 der Halteplatte 33. Die Druckfeder 38 legt sich mit dem anderen Ende unter der vorgenannten Übertragungsscheibe 29 an, die einerseits den Vierkantschaft 24 des Stellbolzens 23 formschlüssig umgreift und andererseits an ihrem Außenumfang wenigstens eine, bei dem dargestellten und insbesondere aus Fig. 2 ersichtlichen Ausführungsbeispiel vier Ausnehmungen 41 aufweist. Diese Ausnehmungen 41 der Übertragungsscheibe 29 umgreifen Vorsprünge 42, die als aus dem Verbindungskragen 40 im unteren Randbereich vorspringende Ausformungen in einem Prägevorgang gebildet sind. Dadurch ist der Stellbolzen 23 durch die Übertragungsscheibe 29 unmittelbar an der Befestigungsplatte 17 drehmomentübertragend festgelegt. Diese unmittelbare, durch die Übertragungsscheibe 29 bewerkstelligte drehfeste Verbindung zwischen dem Stellbolzen 23 und der Befestigungsplatte 17 bleibt in jedem Fall aufrechterhalten, unabhängig davon, ob sich die Feststellvorrichtung in der aus Fig. 1 ersichtlichen Sperrlage befindet, oder ob durch Verstellung des Nockens 26 der Stellbolzen 23 von der eigenfedernden Bremslasche 37 in eine nicht dargestellte Löselage vertikal nach oben verlagert worden ist.

Wie bereits erwähnt, gibt die vorbeschriebene und dargestellte Ausführungsform die Erfindung lediglich beispielsweise wieder, die keinesfalls allein darauf beschränkt ist. Es sind vielmehr noch mancherlei andere Ausgestaltungen und Ausführungsformen der Erfindung denkbar. Alle in der Beschreibung erwähnten und/oder in der Zeichnung dargestellten neuen Merkmale sind erfindungswesentlich, auch wenn sie in den Ansprüchen nicht ausdrücklich beansprucht sind.

**Bezugszeichenliste:**

10 Laufrad
11 Radgabel
12 Gabelrücken
13 Zunge
14 Topfboden
15 Lagerkopf
16 Bohrung
17 Befestigungsplatte
18 Lagerring
19 Rohrmantel
20 Führungsgehäuse
21 Halbschale
22 Halbschale
23 Stellbolzen
24 Vierkantschaft, von 23
25 Kugelkalotte, von 23
26 Nocken

27 Mitnehmerbohrung, von 26
28 Gewindezapfen, an 23
29 Übertragungsscheibe
30 Hutmutter
31 Führungskragen
32 Führungshülse
33 Halteplatte
34 Sperrstern
35 Vertiefung
36 Haltezunge
37 Bremslasche
38 Druckfeder
39 Ecke
40 Verbindungskragen
41 Ausnehmung
42 Vorsprung

**Patentansprüche**

1. Lenkrolle für fahrbare Geräte, insbesondere Müllcontainer, mit einer Feststellvorrichtung, die einen in einem mit einer Befestigungsplatte (17) verbundenen Führungsgehäuse (20) gelagerten Stellnocken (26) aufweist, der einen im Führungsgehäuse (20) undrehbar, aber axial verschiebbar angeordneten, einen Lagerkopf (15) zentral durchdringenden Stellbolzen (23) beaufschlagt, der durch den Radgabelrücken (12) hindurch in die Radgabelhöhlung einragend von einer im Lösesinne selbsttätig rückstellenden Bremslasche (37) belastet ist, und der mit einem an seinem Ansatz anliegenden, im Feststellsinne von einer Feder (38) gestützten, mit der Radgabel (11) formschlüssig verbindbaren Sperrstern (34) drehfest verbunden ist, wobei die einerends den Sperrstern (34) beaufschlagende Feder (38) andernends am Führungsgehäuse (20) abgestützt ist,
**dadurch gekennzeichnet,**
daß eine zwischen dem Führungsgehäuse (20) und der Feder (38) angeordnete, den Stellbolzen (23) formschlüssig und drehfest umfassende Übertragungsscheibe (29) ebenfalls mit der Befestigungsplatte (17) in formschlüssigem und drehfestem Eingriff ist.

2. Lenkrolle nach Anspruch 1, dadurch gekennzeichnet, daß die einen Vierkantschaft (24) des Stellbolzens (23) formschlüssig umfassende Übertragungsscheibe (29) an ihrem Umfang wenigstens eine Ausnehmung (41) aufweist, in die ein Vorsprung (42) der Befestigungsplatte (17) eingreift.

3. Lenkrolle nach Anspruch 1 und/oder 2, dadurch gekennzeichnet, daß die Übertragungsscheibe (29) mehrere an ihrem Umfang verteilt angeordnete Ausnehmungen (41) aufweist, in die eine damit übereinstimmende Anzahl von Vorsprüngen (42) der Befestigungsplatte (17) eingreift.

4. Lenkrolle nach einem oder mehreren der vorhergehenden Ansprüche, dadurch gekennzeichnet, daß die Vorsprünge (42) von Ausformungen am zentralen Verbindungskragen (40) der Befestigungsplatte (17) gebildet sind.

**Claims**

1. A castor for movable equipment, in particular rubbish containers, comprising a fixing device having a control cam (26) which is mounted in a guide housing (20) connected to a securing plate (17) and rich acts on a control pin (23) which is arranged non-rotatably but axially displaceably in the guide housing (20) and which passes centrally through a mounting head (15) and which projecting through the back (12) of the wheel fork into the wheel fork cavity is loaded by a braking bar (37) for automatic return in the release direction, and rich is non-rotatably connected to a locking star member (34) which bears against its shoulder and which is supported in the fixing direction by a spring (38) and rich can be positively connected to the reel fork (11), wherein the spring (38) rich at one end acts on the locking star member (34) is supported at the other end against the guide housing (20), characterised in that a transmission disc (29) which is arranged between the guide housing (20) and the spring (38) and which positively and non-rotatably embraces the control pin (23) is also in positive and non-rotatable engagement with the securing plate (17) .

2. A castor according to claim 1 characterised in that the transmission disc (29) rich positively embraces a square shank (24) of the control pin (23) is provided at its periphery with at least one recess (41) into which engages a projection (42) on the securing plate (17).

3. A castor according to claim 1 and/or claim 2 characterised in that the transmission disc (29) has a plurality of recesses (41) which are arranged distributed at its periphery and into which engages a number, which is the same as the number of recesses, of projections (42) on the securing plate (17).

4. A castor according to one or more of the preceding claims characterised in that the projections (42) are formed by portions which are shaped out on the central connecting collar (40) of the securing plate (17).


**Revendications**

1. Roulette pivotante destinée à des appareils roulants, en particulier à des conteneurs pour ordures, comportant un dispositif de blocage, laquelle présente une came de commande (26) montée dans un corps de guidage (20) relié à une plaque de fixation (17), laquelle came met sous contrainte une tige de positionnement (23) disposée de façon fixe en rotation dans le corps de guidage (20) mais susceptible d'être déplacée axialement, traversant de façon centrale une tête d'appui (15), la tige de positionnement étant repoussée par le dos (12) de la chape (11) à l'intérieur dans la cavité de fourche de roue en saillie par rapport à une languette de freinage (37) rappelée automatiquement en position de libération et qui est susceptible d'être reliée de façon fixe en rotation à une étoile de blocage (34) appuyée sur sa partie en saillie et est poussée par un ressort (38) dans le sens du blocage, le ressort (38) qui, à une extrémité, repousse l'étoile de blocage (34) appuyé, à l'autre extrémité, sur le corps de guidage (20), caractérisée en ce qu'un disque de transmission (29) disposé entre le corps de guidage (20) et le ressort (38) entourant la tige de commande (23) de façon fixe en rotation et ce de façon ajustée, est également en prise avec la plaque de fixation (17) de façon fixe en rotation et de façon ajustée.

2. Roulette pivotante selon la revendication 1, caractérisée en ce que le disque de transmission (29) entourant un fût (24) à quatre pans de la tige de positionnement (23) de façon ajustée présente sur sa périphérie au moins un évidement (41) dans lequel pénètre une saillie (42) de la plaque de fixation (17).

3. Roulette pivotante selon les revendications 1 et/ou 2, caractérisée en ce que le disque de transmission (29) présente plusieurs évidements (41) disposés de façon à être répartis sur sa périphérie, dans lesquels pénètrent un nombre correspondant de saillies (42) de la plaque de fixation (17).

4. Roulette pivotante selon une ou plusieurs des revendications précédentes, caractérisée en ce que les saillies (42) sont formées sur le collet (40) de liaison centrale de la plaque de fixation (17).

FIG.2

FIG.3

FIG.1